(19) Europäisches Patentamt / European Patent Office / Office européen des brevets

(11) **EP 4 782 480 A1**

(12) **EUROPEAN PATENT APPLICATION**
published in accordance with Art. 153(4) EPC

(43) Date of publication:
29.07.2026 Bulletin 2026/31

(21) Application number: 24868238.7

(22) Date of filing: 17.09.2024

(51) International Patent Classification (IPC):
*C08J 3/12* (2006.01)  *C08F 6/00* (2006.01)
*C08F 216/06* (2006.01)

(52) Cooperative Patent Classification (CPC):
C08F 6/00; C08F 216/06; C08J 3/12

(86) International application number:
PCT/JP2024/033063

(87) International publication number:
WO 2025/063161 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.09.2023 JP 2023156447

(71) Applicant: Mitsubishi Chemical Corporation
Tokyo 100-8251 (JP)

(72) Inventors:
• MIZUKAWA, Junichi
Tokyo 100-8251 (JP)
• TOKUHIRO, Ayaka
Tokyo 100-8251 (JP)
• IKUBO, Eri
Tokyo 100-8251 (JP)

(74) Representative: Hoffmann Eitle
Patent- und Rechtsanwälte PartmbB
Arabellastraße 30
81925 München (DE)

(54) **METHOD FOR PRODUCING ETHYLENE-VINYL ALCOHOL COPOLYMER RESIN PELLETS**

(57)    A method for producing ethylene-vinyl alcohol copolymer resin pellets, the method including; forming ethylene-vinyl alcohol copolymer resin intermediate pellets; wherein the intermediate pellets have a volatile content of from 5 to 90 mass% between pelletizing and drying; and wherein the ethylene-vinyl alcohol copolymer resin intermediate pellets have a lower alcohol content of from 0.005 to 15 mass% before drying to provide a method for producing ethylene-vinyl alcohol resin pellets having excellent thermal stability.

EVOH RESIN
↓
EVOH RESIN INTERMEDIATE PELLETS A
↓
EVOH RESIN INTERMEDIATE PELLETS B
↓
EVOH RESIN INTERMEDIATE PELLETS C
↓
EVOH RESIN PELLETS

| PELLETIZING STEP |
| WASHING STEP |
| LOWER ALCOHOL CONTENT ADJUSTMENT STEP |
| DRYING STEP |

**FIG. 1**

## Description

Technical Field

The present disclosure relates to a method for producing ethylene-vinyl alcohol copolymer resin pellets, and more particularly, to a method for producing ethylene-vinyl alcohol copolymer resin pellets having excellent thermal stability.

Background Art

Typically, in ethylene-vinyl alcohol copolymer (hereinafter may be referred to as "EVOH") resin pellets, when a solvent such as a lower alcohol used in the production thereof remains, it causes trouble during molding the EVOH resin pellets into a film or the like. Therefore, it is generally required to reduce the amount of the solvent as much as possible. In addition, it is required to recover such a solvent as much as possible from the viewpoint of economy and safety.

In particular, the release of the solvent into the atmosphere in a drying step causes a problem in terms of environmental protection. Therefore, the solvent is reduced as much as possible before the drying step (for example, see Patent Literatures 1 and 2).

Citation List

Patent Literature

Patent Literature 1: JP 9-316258 A
Patent Literature 2: JP 2002-060413 A

Summary

Technical Problem

However, it has been found that EVOH resin pellets obtained by drying EVOH resin intermediate pellets in which a lower alcohol content is reduced before drying as much as possible have room for improvement in thermal stability.
In view of the above, the present disclosure provides a method for producing EVOH resin pellets having excellent thermal stability.

Solution to Problem

As a result of intensive studies in view of the above circumstances, the present inventors have found that the thermal stability of EVOH resin pellets obtained after drying is improved when the lower alcohol content of EVOH resin intermediate pellets to be fed into a drying step is set in a range of from 0.005 to 15 mass%.
That is, the present disclosure provides the following aspects.

[1] A method for producing ethylene-vinyl alcohol copolymer resin pellets, the method comprising:

forming ethylene-vinyl alcohol copolymer resin intermediate pellets;
wherein the intermediate pellets have a volatile content of from 5 to 90 mass% between pelletizing and drying; and
wherein the ethylene-vinyl alcohol copolymer resin intermediate pellets have a lower alcohol content of from 0.005 to 15 mass% before drying.

[2] A method for producing ethylene-vinyl alcohol copolymer resin pellets, the method comprising:

forming ethylene-vinyl alcohol copolymer resin intermediate pellets are produced in the pelletizing step;
having a plurality of drying; and
wherein the ethylene-vinyl alcohol copolymer resin intermediate pellets have a lower alcohol content of from 0.005 to 15 mass% before the first drying.

[3] The method for producing ethylene-vinyl alcohol copolymer resin pellets according to [1] or [2], wherein the ethylene-vinyl alcohol copolymer resin intermediate pellets have a lower alcohol content of from 0.03 to 9 mass% before drying.

[4] The method for producing ethylene-vinyl alcohol copolymer resin pellets according to any of [1] to [3], wherein the ethylene-vinyl alcohol copolymer resin intermediate pellets have a volatile content of from 10 to 90 mass%.

[5] The method for producing ethylene-vinyl alcohol copolymer resin pellets according to any of [1] to [4], wherein the drying is performed in a sealed space.

[6] The method for producing ethylene-vinyl alcohol copolymer resin pellets according to [2], wherein the first drying is performed in a sealed space.

[7] The method for producing ethylene-vinyl alcohol copolymer resin pellets according to [2] or [6], wherein the first drying is performed using explosion-proof equipment.

Advantageous Effects of Disclosure

In the present disclosure, since the lower alcohol content of EVOH resin intermediate pellets to be fed into the drying step is set in a range of from 0.0005 to 15 mass%, the produced EVOH resin pellets have excellent thermal stability.

Brief Description of Drawings

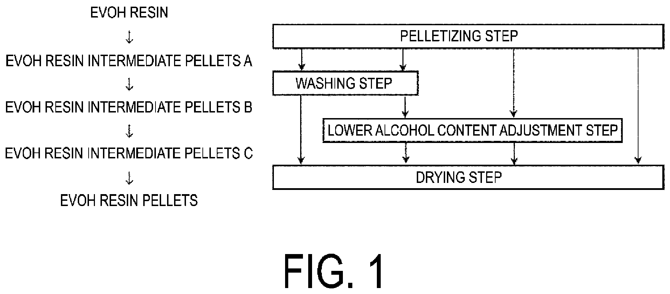

FIG. 1 is a flow chart illustrating one embodiment of the present disclosure.

Description of Embodiments

The present disclosure will be described below with reference to embodiments for carrying out the present disclosure. However, the present disclosure is not limited to the embodiments described below.

In the present disclosure, unless otherwise specified, the expression "from X to Y" (where X and Y are any numerals) encompasses the meaning of "X or more and Y or less" as well as the meaning of "preferably more than X" or "preferably smaller than Y".

Furthermore, the expression "X or more" (where X is any numeral) or "Y or less" (where Y is any numeral) encompasses the meaning of "preferably more than X" or "preferably less than Y".

EVOH Resin

The pellets produced by the present disclosure are made of EVOH resin.

The EVOH resin is a resin produced by saponification of an ethylene-vinyl ester copolymer, which is a copolymer of ethylene and a vinyl ester monomer, and is typically a water-insoluble thermoplastic resin.

As the vinyl ester monomer, vinyl acetate is typically used from the viewpoints of good market availability and good impurity treatment efficiency during production. Examples of the vinyl ester monomer other than vinyl acetate include aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate; and aromatic vinyl esters such as vinyl benzoate. An aliphatic vinyl ester that can be used has typically from 3 to 20 carbons, preferably from 4 to 10 carbons, particularly preferably from 4 to 7 carbons. A single type of these is typically used alone; however, as necessary, a plurality of types of these may be used simultaneously.

A polymerization method in which the ethylene and the vinyl ester monomer are copolymerized can be performed by using any known polymerization method, for example, solution polymerization, suspension polymerization, or emulsion polymerization; however, solution polymerization using a lower alcohol, preferably methanol, as a solvent is generally used. Furthermore, saponification of the resulting ethylene-vinyl ester copolymer can also be performed by a known method.

The EVOH resin thus produced is mainly composed of an ethylene-derived structural unit and a vinyl alcohol structural unit, and contains a small amount of a vinyl ester structural unit that remains without being saponified.

The content of the ethylene structural unit in the EVOH resin is typically from 20 to 60 mol%, preferably from 25 to 50 mol%, particularly preferably from 25 to 35 mol%. The content of the ethylene structural unit can be controlled by the pressure of ethylene in the copolymerization of the vinyl ester monomer and the ethylene. When the content is equal to or more than the lower limit value, gas barrier properties under high humidity and melt moldability are less likely to deteriorate. Conversely, when the content is equal to or less than the upper limit value, gas barrier properties are less likely to deteriorate.

The content of the ethylene structural unit can be measured based on ISO 14663.

The degree of saponification of the EVOH resin is typically from 90 to 100 mol%, preferably from 95 to 100 mol%, particularly preferably from 99 to 100 mol%. The degree of saponification can be controlled by the amount of a saponification catalyst (typically, an alkaline catalyst is used), temperature, time, and the like in the saponification of the ethylene-vinyl ester copolymer. When the degree of saponification is too low, gas barrier properties, thermal stability, moisture resistance, and the like tend to deteriorate.

The degree of saponification of the EVOH resin can be measured based on JIS K6726 (provided that the EVOH resin is used in the form of a solution wherein the EVOH resin is homogeneously dissolved in a water/methanol solvent).

The melt flow rate (MFR) (at 210°C and a load of 2160 g) of the EVOH resin is typically from 0.5 to 100 g/10 minutes, preferably from 1 to 50 g/10 minutes, particularly preferably from 3 to 35 g/10 minutes. When the MFR is equal to or less than the upper limit value, stability during film formation is less likely to be impaired, whereas when the MFR is equal to or more than the lower limit value, melt extrusion is less likely to become difficult due to excessively high viscosity.

The MFR is an index of the degree of polymerization of the EVOH resin and can be adjusted by the amount of a polymerization initiator or the amount of a solvent in the copolymerization of the ethylene and the vinyl ester monomer.

The EVOH resin may further contain a structural unit derived from a comonomer described below within a range such that the effects of the present disclosure are not impaired (for example, in an amount of 10 mol% or less of the EVOH resin).

Examples of the comonomer include olefins such as propylene, 1-butene, and isobutene; hydroxy group-containing $\alpha$-olefins such as 3-buten-1-ol, 3-butene-1,2-diol, 4-penten-1-ol, and 5-hexene-1,2-diol, and derivatives thereof such as esterified products and acylated products thereof; hydroxyalkylvinylidenes such as 2-methylenepropane-1,3-diol and 3-methylenepentane-1,5-diol; hydroxyalkylvinylidene diacetates such as 1,3-diacetoxy-2-methylenepropane, 1,3-dipropionyloxy-2-methylenepropane, and 1,3-dibutyryloxy-2-methylenepropane; unsaturated acids such as acrylic acid, methacrylic acid, crotonic acid, (anhydrous) phthalic acid, (anhydrous) maleic acid, and (anhydrous) itaconic acid, salts thereof, or mono- or dialkyl esters thereof having an alkyl group with 1 to 18 carbons; acrylamides, such as acrylamide, N-alkylacrylamides having an alkyl group with 1 to 18 carbons, N,N-dimethylacrylamide, 2-acrylamidopropane sulfonic acid or salts thereof, and acrylamidopropyldimethylamine or acid salts thereof, or quaternary salts thereof; methacrylamides, such as methacrylamide, N-alkylmethacrylamides having an alkyl group with 1 to 18 carbons, N,N-dimethylmethacrylamide, 2-methacrylamidopropane sulfonic acid or salts thereof, and methacrylamidopropyldimethylamine or acid salts thereof, or quaternary salts thereof; N-vinylamides such as N-vinylpyrrolidone, N-vinylformamide, and N-vinylacetamide; vinyl cyanides such as acrylonitrile and methacrylonitrile; vinyl ethers, such as alkyl vinyl ethers, hydroxyalkyl vinyl ethers, and alkoxyalkyl vinyl ethers, each of which have an alkyl group with 1 to 18 carbons; halogenated vinyl compounds such as vinyl chloride, vinylidene chloride, vinyl fluoride, vinylidene fluoride, and vinyl bromide; vinyl silanes such as trimethoxyvinylsilane; halogenated allyl compounds such as allyl acetate and allyl chloride; allyl alcohols such as allyl alcohol and dimethoxyallyl alcohol; and comonomers such as trimethyl-(3-acrylamido-3-dimethylpropyl)-ammonium chloride and acrylamido-2-methylpropane sulfonic acid. These may be used alone or in combination of two or more types.

Of these, hydroxy group-containing $\alpha$-olefins are preferred, and 3-butene-1,2-diol and 5-hexene-1,2-diol are particularly preferred. In the case where the hydroxy group-containing $\alpha$-olefins are copolymerized, the resulting EVOH resin has a primary hydroxyl group in a side chain. Such an EVOH resin having a primary hydroxyl group in a side chain, particularly an EVOH resin having a 1,2-diol structure in a side chain, is preferred from the viewpoint that good secondary moldability is achieved while gas barrier properties are maintained.

When the EVOH resin has a primary hydroxyl group in a side chain, the content of the structural unit derived from the monomer having a primary hydroxyl group is typically from 0.1 to 20 mol%, preferably from 0.5 to 15 mol%, particularly preferably from 1 to 10 mol% of the EVOH resin.

As the EVOH resin, a "post-modified" EVOH resin, such as an esterified, urethanized, acetalized, cyanoethylated, or oxyalkylenated EVOH resin, may also be used.

In the case where the post-modified EVOH resin is used, the modification rate thereof is typically 10 mol% or less, preferably 4 mol% or less. When the modification rate of the EVOH resin is equal to or less than the upper limit value, the EVOH resin is less likely to be thermally deteriorated, and the long-run property is less likely to be deteriorated.

Further, the EVOH resin may be a mixture of EVOH resins having different ethylene structural unit contents, saponification degrees, polymerization degrees, copolymerization components, or the like.

The EVOH resin pellets produced by the present disclosure may contain a resin composition obtained by mixing a resin other than EVOH resin. In such a case, the content of the resin composition obtained by mixing the resin other than EVOH resin is, for example, 20 wt.% or less, preferably 10 wt.% or less.

The EVOH resin pellets produced by the present disclosure may contain an additive generally blended in EVOH resins, such as a heat stabilizer, an antioxidant, an antistatic agent, a colorant, an ultraviolet absorber, a plasticizer, a light stabilizer, a surfactant, an antibacterial agent, a desiccant, an anti-blocking agent, a flame retardant, a crosslinking agent, a curing agent, a foaming agent, a nucleating agent, an antifogging agent, an additive for biodegradation, a silane coupling agent, or an oxygen absorber. These may be used alone or in combination of two or more types.

Method for Producing EVOH Resin Pellets

The method for producing EVOH resin pellets of the present disclosure is a method for producing EVOH resin pellets, the method including a drying step, in which the lower alcohol content of EVOH resin intermediate pellets to be fed into the drying step is set in a range of from 0.005 to 15 mass%. The EVOH resin pellets thus obtained can be produced through the following steps, for example, as illustrated in FIG. 1.

In the present disclosure, the term "lower alcohol" means an aliphatic alcohol having 1 to 10 carbons, such as methanol, ethanol, propanol, n-butanol, or t-butanol.

Pelletizing Step

Firstly, as described above, ethylene and a vinyl ester elastomer are copolymerized to produce an ethylene copolymer, and this copolymer is saponified with an alkali to produce an EVOH resin in a fluid state. The EVOH resin in a fluid state is pelletized to yield EVOH resin intermediate pellets (A).

Examples of a method for pelletizing the EVOH resin in a fluid state include: a method in which the EVOH resin in a fluid state is extruded from a discharge port of an extruder, cut in a molten state, and then cooled and solidified to produce pellets (hot cutting method); and a method in which the EVOH resin in a fluid state is extruded into a solidification bath and cooled and solidified in the solidification bath to yield an EVOH resin strand, and the resultant EVOH resin strand is then cut (strand cutting method). Of these, the strand cutting method is preferably used because porous pellets can be produced.

In both of the hot cutting method and the strand cutting method, as the EVOH resin in a fluid state used as a pellet material, a water-containing EVOH resin composition, an EVOH resin in a molten state obtained by melting EVOH resin pellets (dry EVOH composition), or the like may be used.

The water-containing EVOH resin composition is prepared by dissolving the EVOH resin using a solvent. The concentration of the EVOH resin in the water-containing EVOH resin composition is typically from 20 to 60 mass%.

Examples of the solvent that can be used include a lower alcohol and a mixed solvent of water/lower alcohol. Of these, a mixed solvent of water/lower alcohol is preferably used. The mass mixing ratio of the water/lower alcohol is preferably from 80/20 to 5/95.

As the lower alcohol, methanol is particularly preferably used.

The water-containing EVOH resin composition preferably contains from 0 to 100 parts by mass of a lower alcohol and from 10 to 500 parts by mass of water relative to 100 parts by mass of the EVOH resin.

The method for adjusting the water content of the water-containing EVOH resin composition is not particularly limited. In order to increase the water content, for example, it is possible to use a method of spraying the solvent to a solution or slurry of the EVOH resin obtained by solution polymerization, a method of mixing a solution or slurry of the EVOH resin with the solvent, and a method of bringing a solution or slurry of the EVOH resin into contact with vapor of the solvent. In order to reduce the water content, the water-containing EVOH resin composition may be dried as appropriate. For example, the drying can be performed using a fluidization type hot-air dryer or a stationary type hot-air dryer.

Hot Cutting Method

In the hot cutting method, in the case where the water-containing EVOH resin composition is fed into an extruder as a pellet material to be produced by the hot cutting method, the temperature of the water-containing EVOH resin composition in the extruder is preferably from 70 to 170°C, more preferably from 80 to 170°C, still more preferably from 90 to 170°C. When the temperature of the water-containing EVOH resin composition is equal to or higher than the lower limit value, the EVOH resin is less likely to be completely melted, whereas when the temperature of the water-containing EVOH resin composition is equal to or lower than the upper limit value, the EVOH resin is less likely to be thermally deteriorated.

Meanwhile, in the case where the dry EVOH resin composition is fed into an extruder as a pellet material, the temperature of the dry EVOH resin composition in the extruder is preferably from 150 to 300°C, more preferably from 160 to 280°C, still more preferably from 170 to 250°C.

The temperatures of the water-containing EVOH resin composition and the dry EVOH resin composition in the extruder refer to a temperature detected near the discharge port at the distal end of the extruder by means of a temperature sensor disposed in the cylinder of the extruder.

The water-containing EVOH resin composition or the dry EVOH resin composition extruded from the die of the extruder, i.e., the EVOH resin in a molten state, is cut before being cooled and solidified. The cutting method may be either a hot cutting method (in-air hot cutting method) in which cutting is performed in the atmosphere, or an in-water cutting method in which cutting is performed in cooling water after the resin composition is extruded into a container filled with the cooling water and provided with a cutter.

The temperature of the cooling water in the in-water cutting method is a temperature at which the EVOH resin extruded in a molten state does not instantaneously solidify. In the case where the water-containing EVOH resin composition is used as a material, the temperature of the cooling water is preferably from -20 to 50°C, more preferably from -5 to 30°C.

In the case where the dry EVOH resin composition is used as a material, the temperature of cooling water in the in-water cutting method is higher than that in the case where the water-containing EVOH resin composition is used as a material, and is typically from 0 to 90°C, preferably from 20 to 70°C, because the dry EVOH resin composition is more likely to solidify than in the case where the water-containing EVOH resin composition is used as a material.

The cooling water is not limited to water, and examples of the cooling water that can be used also include a water/alcohol mixed solution; aromatic hydrocarbons such as benzene; ketones such as acetone and methyl ethyl ketone; ethers such as dipropyl ether; and organic esters such as methyl acetate, ethyl acetate, and methyl propionate. Of these, water or a water/alcohol mixed solution is used from the viewpoint of easy handling. In the water/alcohol mixed solution, water/alcohol (mass ratio) is typically from 90/10 to 99/1. As the alcohol, a lower alcohol such as methanol, ethanol, or propanol can be used, and methanol is preferably used from the industrial viewpoint.

Strand Cutting Method

In the strand cutting method, in the case where the water-containing EVOH resin composition is fed into an extruder as a pellet material, the temperature of the water-containing EVOH resin composition extruded into a solidification bath is typically from 10 to 100°C. The temperature of the solidification bath is a temperature at which the extruded EVOH resin can be cooled and solidified, and is typically from -10 to 40°C. The residence time is typically from about 10 to about 400 seconds.

Meanwhile, in the case where the dry EVOH resin composition is fed into an extruder as a pellet material, the temperature at which the EVOH resin is extruded into a solidification bath is typically from 150 to 300°C. The temperature of the solidification bath is typically from 0 to 90°C. The residence time is from about 2 to about 400 seconds.

As a solidification liquid used in a solidification bath, the same solution as the cooling water used for the hot cutting method can be employed.

Thus, the EVOH resin intermediate pellets (A) are obtained. Preferably, the EVOH resin intermediate pellets (A) are porous pellets in view of the lower alcohol content adjustment as described below.

The porous pellets can be obtained by, for example, using an alcohol or a water/alcohol solution of the EVOH resin (water-containing EVOH resin composition) as a pellet material in the strand cutting method.

In the case where the EVOH resin intermediate pellets (A) are porous, the lower alcohol content can be efficiently adjusted in the "lower alcohol content adjustment step" described below by allowing a predetermined concentration of the lower alcohol to permeate the pores of the EVOH resin intermediate pellets (A).

The shape of the EVOH resin intermediate pellets (A) typically depends upon the production method thereof, and may be various shapes. Examples of the shape of the EVOH resin intermediate pellets (A) include a spherical shape, an oval shape, a cylindrical shape, a cubic shape, a rectangular parallelepiped shape, and an irregular shape, but the shape is typically an oval shape or a cylindrical shape.

As for the size of the pellets, from the viewpoint of convenience in the subsequent use as a molding material, in the case of oval pellets, the major axis length is typically from 1 to 10 mm, preferably from 2 to 7 mm, and the minor axis length is typically from 1 to 6 mm, preferably from 2 to 5 mm; and in the case of cylindrical pellets, the diameter of the base is typically from 1 to 10 mm, preferably from 2 to 7 mm, and the length is typically from 1 to 10 mm, preferably from 3 to 8 mm.

When the lower alcohol content of the obtained EVOH resin intermediate pellets (A) satisfies the predetermined concentration range, the method may proceed to the "drying step" without undergoing the "washing step" and/or the "lower alcohol content adjustment step" as described below.

Washing Step

The EVOH resin in a fluid state used as the pellet material typically contains an alkali catalyst used in the saponification, by-product salts, other impurities, and the like.

Hence, the obtained EVOH resin intermediate pellets (A) typically contain these impurities and the like. Therefore, the EVOH resin intermediate pellets (A) are typically subjected to a washing step for removing these impurities and the like.

The washing liquid used in the washing step is typically an aqueous solution. Examples of the washing method include a method of feeding the EVOH resin intermediate pellets (A) into the washing liquid and stirring them. The washing step may be performed a plurality of times.

In the washing step, as described above, it is common technical knowledge for those skilled in the art that the EVOH resin intermediate pellets (A) are washed so as to reduce the amount of the lower alcohol contained in the EVOH resin intermediate pellets (A) as much as possible. In this washing step, typically, the EVOH resin intermediate pellets (B) having an extremely low lower alcohol content (typically 0.005 mass% or less) can be obtained by washing the EVOH resin intermediate pellets (A).

In the washing step, the washing liquid is adjusted so as to achieve the lower alcohol content specified in the present disclosure, and then washing is performed, whereby the lower alcohol content can be achieved to the predetermined amount.

However, it is preferred to provide the lower alcohol content adjustment step described below from the viewpoint that the lower alcohol content can be adjusted with high accuracy.

Lower Alcohol Content Adjustment Step

In order to convert the EVOH resin intermediate pellets (B) into EVOH resin intermediate pellets (C) containing the predetermined amount of lower alcohol, for example, it is preferred to provide a lower alcohol content adjustment step of bringing the EVOH resin intermediate pellets (B) into contact with a treatment liquid containing a lower alcohol at a predetermined concentration.

That is, in the lower alcohol content adjustment step, the EVOH resin intermediate pellets (C) having the predetermined lower alcohol content can be obtained by bringing the treatment liquid containing a lower alcohol at a predetermined concentration into contact with the EVOH resin intermediate pellets (B). By doing so, the EVOH resin intermediate pellets (C) having the predetermined lower alcohol content can be easily produced by simply adjusting the concentration of the lower alcohol contained in the treatment liquid.

As a method for bringing the EVOH resin intermediate pellets (B) into contact with the treatment liquid containing a lower alcohol at the predetermined concentration, for example, a method of immersing the EVOH resin intermediate pellets (B) in the treatment liquid, or a method of spraying the treatment liquid onto the EVOH resin intermediate pellets (B) can be used. However, it is preferred to use the method of immersing the EVOH resin intermediate pellets (B) in the treatment liquid and then stirring them together with the treatment liquid from the viewpoint that the lower alcohol can be homogeneously incorporated.

The lower alcohol concentration of the treatment liquid used in the lower alcohol content adjustment step depends upon the lower alcohol content of the EVOH resin intermediate pellets (B) to be contacted, the weight ratio of the pellets to the treatment liquid, and the contact time, but, for example, is preferably from 0.01 to 40 mass%, more preferably from 0.02 to 25 mass%, still more preferably from 0.05 to 15 mass%.

When the EVOH resin intermediate pellets (B) are immersed in the treatment liquid, the immersion time (time for which the EVOH resin intermediate pellets (B) are in contact with the treatment liquid) is, for example, preferably from 1 minute to 6 hours, more preferably from 30 minutes to 3 hours.

The liquid temperature of the treatment liquid is, for example, preferably from 1 to 60°C., more preferably from 10 to 40°C.

The treatment liquid is typically an aqueous solution. Alternatively, a liquid prepared by incorporating a predetermined amount of lower alcohol into the washing liquid used in the washing step may be used.

By doing so, the EVOH resin intermediate pellets (C) containing the predetermined amount of lower alcohol can be easily obtained. The lower alcohol content of the EVOH resin intermediate pellets (C) is 0.005 to 15 mass%, preferably 0.015 to 15 mass%, more preferably 0.025 to 12 mass%, particularly preferably 0.03 to 9 mass%, especially preferably 0.035 to 7 mass%.

In the case where the lower alcohol content has already been achieved to the predetermined amount in the washing step, this lower alcohol content adjustment step is not necessary. However, since it is necessary to perform a complicated operation for adjusting the lower alcohol content to the predetermined range in the washing step, it is preferred to separately provide the lower alcohol content adjustment step.

Drying Step

The volatile content of the EVOH resin intermediate pellets (C) thus obtained is typically from 10 to 90 mass%, preferably from 20 to 80 mass%, more preferably from 30 to 70 mass%, still more preferably from 45 to 65 mass%. Therefore, in the present disclosure, it is necessary to provide a drying step for drying the EVOH resin intermediate pellets (C). A plurality of such drying steps (for example, the first drying step and the second drying step, and the like) may be provided.

The drying step may be any step as long as the EVOH resin intermediate pellets (C) can be dried; however, for example, the drying step is preferably performed in a sealed space in terms of environmental protection because volatile components (water, lower alcohol, and the like) are easily recovered.

Examples of the drying method that can be performed in a sealed space include fluidized drying using a cylindrical-grooved agitator dryer, a cylindrical dryer, a rotary dryer, a fluidized-bed dryer, a vibrating fluidized-bed dryer, or a conical rotary dryer, and static drying using a batch box dryer, a band dryer, a tunnel dryer, or a vertical silo dryer. In particular, drying performed using explosion-proof equipment is preferred. Various drying methods may be used in combination.

In the present disclosure, the term "sealed space" means a space in which the entry and exit of air or gas are restricted. That is, in such a space, it is possible to restrict the discharge of gas to the outside by circulating air or gas, or to keep the pressure in the space constant by setting the amount of air or gas to be discharged (discharge amount) and the amount of air or gas to be introduced (introduction amount) to be the same amount.

In the present disclosure, the term "explosion-proof equipment" means equipment in general that implements explosion-proof measures for electric devices that could serve as an ignition source. That is, when the drying step is performed using explosion-proof equipment, explosion and fire caused by leakage of flammable substances or the like can be effectively prevented, which is preferred in terms of environmental protection.

The drying temperature in the drying step is preferably set in a range of from 40 to 190°C, more preferably from 60 to 170°C, still more preferably from 80 to 150°C. In addition, drying can be efficiently performed by passing a gas such as air or other gases at a temperature of from 80 to 150°C through a dryer.

The drying time in the drying step is preferably set in a range of from 5 minutes to 100 hours, more preferably from 30 minutes to 90 hours, still more preferably from 1 to 80 hours, particularly preferably from 10 to 70 hours.

The volatile content of the EVOH resin pellets thus produced is typically from 0.01 to 0.5 mass%, preferably from 0.05 to 0.35 mass%, particularly preferably from 0.1 to 0.3 mass%.

That is, the drying in the present disclosure is to adjust the volatile content of the EVOH resin pellets to be produced to 0.5 mass% or less.

The volatile contents of the EVOH resin intermediate pellets (C) and the EVOH resin pellets are measured and calculated by the following method (in Comparative Example 1, the volatile content of the EVOH resin intermediate pellets (B) was measured and calculated).

That is, in the present disclosure, the volatile content is calculated by the dry residue method. Specifically, the mass of the EVOH resin intermediate pellets (B) or (C) or the EVOH resin pellets before drying ($W_1$) is weighed with an electronic balance. Thereafter, the resin pellets are dried in a hot-air dryer at 150°C for 5 hours and left to cool in a desiccator for 30 minutes, and the mass of the resin pellets after cooling ($W_2$) is then weighed. The volatile content is calculated from the following equation.

$$\text{Volatile content (mass\%)} = [(W_1 - W_2)/W_1] \times 100$$

As described above, contrary to common technical knowledge in the related art that EVOH resin intermediate pellets (B) having a sufficiently low lower alcohol content are introduced into a drying step, the present disclosure rather introduces the EVOH resin intermediate pellets (C) containing the predetermined amount of lower alcohol into the drying step. This makes it possible to produce EVOH resin pellets having excellent thermal stability.

The reason for this is not clear, but it is presumed that the thermal stability of the produced EVOH resin pellets is improved because the state of water volatilization differs from the usual state, leading to enhanced molecular arrangement during the drying and increased crystallinity.

Therefore, when a plurality of drying steps is provided, it is sufficient that the lower alcohol content of the EVOH resin intermediate pellets (C) to be fed into the first drying step is set to the predetermined range.

The EVOH resin pellets thus produced are used as they are or prepared into various forms such as powder and liquid forms, and are then provided as a molding material for various molded products.

Examples

Hereinafter, the present disclosure will be more specifically described with reference to Examples, but the present disclosure is not limited to the Examples below as long as the gist of the present disclosure is not deviated. In the Examples, "parts" and "%" are based on mass.

Example 1

Firstly, an EVOH resin solution having an ethylene content of 32 mol%, a saponification degree of 99.7 mol%, and an MFR of 12 g/10 minutes (at 210°C and a load of 2160 g) [water/methanol mixed solution (water/methanol = 42/58 of mass mixing ratio, EVOH resin concentration 40%, solution temperature 60°C)] was prepared.

Subsequently, the EVOH resin solution was extruded into a water tank containing a solidification liquid (water/-methanol = 97/3 of mass mixing ratio) maintained at 2°C to form a strand. The strand was solidified and then cut with a cutter to yield cylindrical EVOH resin intermediate pellets (A).

Thereafter, in the washing step, 100 parts of the EVOH resin intermediate pellets (A) were fed into 200 parts of a washing liquid, and stirred at a temperature of from 30 to 35°C for 1 hour. The washing liquid was then replaced. The washing was performed in the same manner five times in total.

The methanol content of the EVOH resin intermediate pellets (B) after the washing treatment was 0.004% as analyzed by gas chromatography.

Further, in the lower alcohol content adjustment step, 100 parts of the EVOH resin intermediate pellets (B) were fed into 200 parts of a treatment liquid (an aqueous solution containing 0.04% methanol), and stirred at a temperature of from 30 to 35°C for 2 hours. The lower alcohol content adjustment was then performed once.

The methanol content of the EVOH resin intermediate pellets (C) after the lower alcohol content adjustment was 0.02% as analyzed by gas chromatography. The resin concentration was 40.7%, and the volatile content was 59.3%.

The EVOH resin intermediate pellets (C) after the lower alcohol content adjustment were dried at a temperature of 120°C for 18 hours in a batch vacuum dryer, and subsequently dried for 10 hours with a batch vented box dryer while blowing nitrogen gas at a temperature of 118°C, to produce EVOH resin pellets having a volatile content of 0.2%.

Example 2

EVOH resin pellets were produced in the same manner as in Example 1, except that the methanol concentration of the treatment liquid was changed to 0.1% in the lower alcohol content adjustment step of Example 1.

Example 3

EVOH resin pellets were produced in the same manner as in Example 1, except that the methanol concentration of the treatment liquid was changed to 0.2% in the lower alcohol content adjustment step of Example 1.

Example 4

EVOH resin pellets were produced in the same manner as in Example 1, except that the methanol concentration of the treatment liquid was changed to 0.4% in the lower alcohol content adjustment step of Example 1.

Example 5

EVOH resin pellets were produced in the same manner as in Example 1, except that the methanol concentration of the treatment liquid was changed to 11.0% in the lower alcohol content adjustment step of Example 1.

Example 6

EVOH resin pellets were produced in the same manner as in Example 1, except that the methanol concentration of the treatment liquid was changed to 22.0% in the lower alcohol content adjustment step of Example 1.

Comparative Example 1

EVOH resin pellets were produced in the same manner as in Example 1, except that the lower alcohol content adjustment step of Example 1 was not performed. That is, Comparative Example 1 corresponds exactly to an example in the related art in which the methanol content of the EVOH resin intermediate pellets before drying to be fed into the drying step is extremely low.

The methanol content (%) and volatile content (%) of the EVOH resin intermediate pellets as well as the volatile content (%) of the EVOH resin pellets are shown in Table 1 below.

Measurement methods of the physical properties of the EVOH resin intermediate pellets and the EVOH resin pellets are as follows.

Methanol Content

The measurement was performed by gas chromatography (external standard method).

That is, 5.0 g of the EVOH resin intermediate pellets or EVOH resin pellets and 20.0 g of distilled water were weighed, and the pellets were stirred in the distilled water for 3 hours to extract methanol in the pellets.

The extracted liquid was filtered to prepare a sample, and the methanol concentration of the sample was quantitatively determined using gas chromatography (GC) under the following conditions.

• Gas Chromatography Conditions

Vaporization chamber temperature: 160°C (split ratio 10:1)
Carrier gas: He (64.2 kPa)
Column: Supel-Q PLOT (length 30 m, internal diameter 0.32 mm)
Column temperature: 90°C (equilibration time 3 minutes)
Temperature program: 90°C (keep the temperature for 10 minutes) $\rightarrow$ raise the temperature at 10.0°C/min $\rightarrow$ 150°C (keep the temperature for 2 minutes)
Detector: FID
Detector temperature: 160°C
Make up gas: $N_2$ (30 mL/min)
$H_2$ flow rate: 40 mL/min
Air flow rate: 400 mL/min

Subsequently, based on a value as quantitatively determined by gas chromatography (GC), the methanol content per intermediate pellet or EVOH resin pellet was calculated using the following equation. •

"Methanol content per pellet (%)"

= "methanol concentration in GC sample (GC analytical value) (%)" × "mass of

weighed distilled water (g) + mass of volatile content in weighed pellets (g)"/mass of

weighed pellets (g)

= "GC analytical value (%)" × "mass of weighed distilled water(g) + {mass of

weighed pellets (g) × (volatile content of pellets (%)/100)}"/mass of weighed pellets (g)

[Table 1]

| | EVOH resin intermediate pellets | | EVOH resin pellets |
|---|---|---|---|
| | | | (%) |
| | Methanol content | Volatile content | Volatile content |
| Example 1 | 0.02 | 59.3 | 0.2 |
| Example 2 | 0.04 | 57.7 | 0.1 |
| Example 3 | 0.08 | 57.8 | 0.1 |
| Example 4 | 0.17 | 58.3 | 0.1 |
| Example 5 | 5.31 | 59.2 | 0.2 |
| Example 6 | 10.43 | 59.2 | 0.2 |
| Comparative Example 1 | 0.004 | 58.3 | 0.1 |

Coloration evaluation was performed on the EVOH resin pellets of Examples 1 to 6 and Comparative Example 1, and the thermal stability thereof was evaluated as follows. The results are shown in Table 2 below. It can be said that the lower the numerical value of the coloration evaluation, the smaller the proportion of dark color tones and the higher the thermal stability.

Coloration Evaluation

The EVOH resin pellets were evaluated for the ratio of color number "2167" (R: 136, G: 120, B: 120) to color number "2440" (R: 152, G: 136, B: 136) ([2167]/[2440]) using a visual analyzer IRIS VA400 (available from Alpha MOS S.A.). Color number "2167" is a color having a dark tone, and color number "2440" is a color having a light tone. It is meant that the greater the proportion of the dark color tone (the greater the numerical value of the coloration evaluation), the more the sample is thermally deteriorated and consequently colored.

[Table 2]

|  | EVOH resin intermediate pellets | EVOH resin pellets (%) |
|---|---|---|
|  | Methanol content | Coloration Evaluation |
| Example 1 | 0.02 | 6.3 |
| Example 2 | 0.04 | 3.0 |
| Example 3 | 0.08 | 3.5 |
| Example 4 | 0.17 | 4.7 |
| Example 5 | 5.31 | 3.8 |
| Example 6 | 10.43 | 5.6 |
| Comparative Example 1 | 0.004 | 6.7 |

It was found that, in the coloration evaluation, the proportions of the dark color tone in all of Examples 1 to 6 are smaller than that in the example in the related art (Comparative Example 1), and that thermal stability is excellent in Examples 1 to 6.
Specific embodiments of the present disclosure have been described in the above Examples, but the above Examples are merely illustrative and are not to be construed as limiting. Various modifications apparent to those skilled in the art are intended to be within the scope of the present disclosure.

Industrial Applicability

The present disclosure can produce EVOH resin pellets having excellent thermal stability.

**Claims**

1. A method for producing ethylene-vinyl alcohol copolymer resin pellets, the method comprising:

    forming ethylene-vinyl alcohol copolymer resin intermediate pellets;
    wherein the intermediate pellets have a volatile content of from 5 to 90 mass% between pelletizing and drying; and
    wherein the ethylene-vinyl alcohol copolymer resin intermediate pellets have a lower alcohol content of from 0.005 to 15 mass% before drying.

2. A method for producing ethylene-vinyl alcohol copolymer resin pellets, the method comprising:

    forming ethylene-vinyl alcohol copolymer resin intermediate pellets are produced in the pelletizing step;
    having a plurality of drying; and
    wherein the ethylene-vinyl alcohol copolymer resin intermediate pellets have a lower alcohol content of from 0.005 to 15 mass% before the first drying.

3. The method for producing ethylene-vinyl alcohol copolymer resin pellets according to claim 1 or 2, wherein the ethylene-vinyl alcohol copolymer resin intermediate pellets have a lower alcohol content of from 0.03 to 9 mass% before drying.

4. The method for producing ethylene-vinyl alcohol copolymer resin pellets according to claim 2, wherein the ethylene-vinyl alcohol copolymer resin intermediate pellets have a volatile content of from 10 to 90 mass%.

5. The method for producing ethylene-vinyl alcohol copolymer resin pellets according to claim 1 or 2, wherein the drying is performed in a sealed space.

6. The method for producing ethylene-vinyl alcohol copolymer resin pellets according to claim 2, wherein the first drying is performed in a sealed space.

7. The method for producing ethylene-vinyl alcohol copolymer resin pellets according to claim 2 or 6, wherein the first drying is performed using explosion-proof equipment.

EVOH RESIN

↓

EVOH RESIN INTERMEDIATE PELLETS A

↓

EVOH RESIN INTERMEDIATE PELLETS B

↓

EVOH RESIN INTERMEDIATE PELLETS C

↓

EVOH RESIN PELLETS

| PELLETIZING STEP |
| WASHING STEP |
| LOWER ALCOHOL CONTENT ADJUSTMENT STEP |
| DRYING STEP |

# FIG. 1

# EP 4 782 480 A1

## INTERNATIONAL SEARCH REPORT

| International application No. |
| --- |
| **PCT/JP2024/033063** |

### A. CLASSIFICATION OF SUBJECT MATTER

**C08J 3/12**(2006.01)i; **C08F 6/00**(2006.01)i; **C08F 216/06**(2006.01)i
FI: C08J3/12 Z CEX; C08F6/00; C08F216/06

According to International Patent Classification (IPC) or to both national classification and IPC

### B. FIELDS SEARCHED

Minimum documentation searched (classification system followed by classification symbols)

C08J3/12; B29B9/02; C08F6/00; C08F216/06; C08L29/02; B29K29/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2011/043408 A1 (THE NIPPON SYNTHETIC CHEMICAL INDUSTRY CO., LTD.) 14 April 2011 (2011-04-14)<br>entire text, in particular, claims, paragraphs [0048]-[0071], [0103]-[0111], [0125]-[0155] | 1-7 |
| A | WO 2009/084509 A1 (THE NIPPON SYNTHETIC CHEMICAL INDUSTRY CO., LTD.) 09 July 2009 (2009-07-09)<br>entire text | 1-7 |
| A | WO 2009/084510 A1 (THE NIPPON SYNTHETIC CHEMICAL INDUSTRY CO., LTD.) 09 July 2009 (2009-07-09)<br>entire text | 1-7 |
| A | JP 2022-094520 A (KURARAY CO., LTD.) 27 June 2022 (2022-06-27)<br>entire text | 1-7 |
| A | JP 2002-121290 A (KURARAY CO., LTD.) 23 April 2002 (2002-04-23)<br>entire text | 1-7 |

☑ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **20 November 2024** | **03 December 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

14

## INTERNATIONAL SEARCH REPORT

| International application No. |
| --- |
| **PCT/JP2024/033063** |

**C. DOCUMENTS CONSIDERED TO BE RELEVANT**

| Category* | Citation of document, with indication, where appropriate, of the relevant passages | Relevant to claim No. |
| --- | --- | --- |
| A | WO 2004/009313 A1 (KURARAY CO., LTD.) 29 January 2004 (2004-01-29) entire text | 1-7 |
| P, A | WO 2024/128307 A1 (KURARAY CO., LTD.) 20 June 2024 (2024-06-20) entire text | 1-7 |

Form PCT/ISA/210 (second sheet) (July 2022)

## INTERNATIONAL SEARCH REPORT
### Information on patent family members

International application No.

**PCT/JP2024/033063**

| Patent document cited in search report | | | Publication date (day/month/year) | Patent family member(s) | | | Publication date (day/month/year) |
|---|---|---|---|---|---|---|---|
| WO | 2011/043408 | A1 | 14 April 2011 | US | 2012/0172564 | A1 | |
| | | | | entire text, in particular, claims, paragraphs [0055]-[0083], [0117]-[0125], [0139]-[0191] | | | |
| | | | | EP | 2487191 | A1 | |
| | | | | CN | 102549025 | A | |
| | | | | TW | 201127858 | A | |
| WO | 2009/084509 | A1 | 09 July 2009 | US | 2010/0314791 | A1 | |
| | | | | entire text | | | |
| | | | | EP | 2228405 | A1 | |
| | | | | CN | 101910293 | A | |
| | | | | TW | 200936620 | A | |
| WO | 2009/084510 | A1 | 09 July 2009 | US | 2010/0289172 | A1 | |
| | | | | entire text | | | |
| | | | | EP | 2230274 | A1 | |
| | | | | CN | 101910294 | A | |
| | | | | TW | 200940635 | A | |
| JP | 2022-094520 | A | 27 June 2022 | (Family: none) | | | |
| JP | 2002-121290 | A | 23 April 2002 | US | 2002/0028871 | A1 | |
| | | | | entire text | | | |
| | | | | GB | 2365435 | A | |
| | | | | EP | 1179546 | A1 | |
| | | | | AT | 312851 | T | |
| WO | 2004/009313 | A1 | 29 January 2004 | US | 2006/0108703 | A1 | |
| | | | | entire text | | | |
| | | | | EP | 1547744 | A1 | |
| | | | | AU | 2003248066 | A | |
| | | | | AT | 525183 | T | |
| WO | 2024/128307 | A1 | 20 June 2024 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9316258 A
- JP 2002060413 A